# EUROPÄISCHE PATENTANMELDUNG

(11) **EP 2 378 839 A2**
(43) Veröffentlichungstag der Anmeldung: **19.10.2011**
(21) Anmeldenummer: 11003293.5
(22) Anmeldetag: 19.04.2011
(51) Int. Cl.: H05B 33/08

(54) **LED-Lampe und Leuchte**

(30) Priorität: 19.04.2010 DE 102010015613
(71) Anmelder: Larsen Indoor Light Concept GmbH & Co. KG, 22113 Oststeinbek (DE)
(72) Erfinder: Die Erfindernennung liegt noch nicht vor
(74) Vertreter: Eisenführ, Speiser & Partner

(57) **Zusammenfassung**

Ausführungsbeispiele der Erfindung betreffen eine LED-Lampe, die eine zumindest teilweise lichtdurchlässige Röhre und mehrere in der Röhre angeordnete Leuchtdioden aufweist. Die Leuchtdioden sind in Form einer Parallel/Reihen-Schaltung (74) miteinander verschaltet sind. Hierbei sind vorzugsweise mindestens zwei Reihenschaltungen aus Leuchtdioden parallel zueinander geschaltet. Weiterhin kann ein Vollweggleichrichter, insbesondere in Form eines Brückengleichrichters vorgesehen sein, der mit der Parallel/Reihenschaltung verbunden ist. Die LED-Lampe lässt sich störungsfrei auch mit einem elektronischen Vorschaltgerät betreiben und kann eine herkömmliche Leuchtstofflampe ohne Umbaumaßnahmen ersetzen.

## Beschreibung

Die Erfindung betrifft eine LED-Lampe, insbesondere in Form einer LED-Röhre, die ein lichtdurchlässiges Rohr oder eine Röhre aus transparentem oder semitransparenten Material wie etwa Glas oder Kunststoff aufweist, in deren Innerem mehrere Leuchtdioden oder Lumineszenzdioden, kurz LEDs, angeordnet sind. Weiterhin ist die Erfindung auf eine Beleuchtungseinrichtung in Form einer LED-Leuchte und auf eine hierbei verwendbare Platine, insbesondere Universalplatine gerichtet.

Aus dem Stand der Technik sind LED-Lampen, das heißt mit Leuchtdioden, LEDs, bestückte Lampen, bekannt, die z.B. in LED-Leuchten einsetzbar sind. LEDs zeichnen sich gegenüber herkömmlichen Beleuchtungseinrichtungen, wie Leuchtstofflampen und/oder Glühlampen durch eine erhöhte Lebensdauer, einen geringen Energieverbrauch und insbesondere durch eine hohe Lichtausbeute aus. Die deutlich höhere Lebensdauer verringert den Wartungsaufwand, da die Leuchtmittel, z.B. die LEDs, seltener ausgetauscht werden müssen.

Die in Bürogebäuden verwendeten Beleuchtungskörper sind demgegenüber häufig Leuchtstofflampen, die in der Regel mit für ihren Betrieb erforderlichen Komponenten wie Heizwendeln, Drosseln, Strombegrenzern und Starterkomponenten versehen sind. Diese Komponenten können z.B. in Form von Vorschaltgeräten, insbesondere elektronischen Vorschaltgeräten, EVG, ausgebildet sein.

Falls anstelle einer Leuchtstofflampe hingegen eine LED-Lampe, d.h. eine mit LEDs bestückte Röhre, in die Lampenfassungen bei ansonsten unveränderter Beschaltung eingesetzt würde, könnten unerwartete Probleme wie z.B. unerwünschte Lampenabschaltungen auftreten.

Erfindungsgemäß wurde erkannt, dass solche unerwünschten Störungen auf elektronische Vorschaltgeräte, EVGs, zurückzuführen sein können, die die an der Lampe auftretenden Strom- und/oder Spannungswerte erfassen oder überwachen und bei Abweichungen von den erwarteten Werten eine Lampenabschaltung steuern. Die erwarteten Werte entsprechen hierbei den für die jeweilige Leuchtstoffröhre üblichen Werten, die aber bei LED-Bestückung in der Regel nicht erreicht werden. Das Vorschaltgerät kann dann eventuell die Lampe als fehlerhaft einstufen und die Stromzufuhr unterbrechen, d.h. die LED-Lampe abschalten.

Zur Lösung dieses Problems könnte nun überlegt werden, das jeweilige EVG zu demontieren oder überbrücken, was aber hohen Arbeitsaufwand erfordert und eine Zugänglichkeit des Leuchteninneren voraussetzt.

Die Aufgabe der Erfindung besteht darin, eine LED-Lampe und eine Leuchte bzw. Leuchte mit einer solchen LED-Lampe bereitzustellen, die die Verwendung der LED-Technik in Verbindung mit herkömmlichen Leuchtstofflampenfassungen und dabei verwendeten Vorschaltgeräten ohne besondere Anpassungsarbeiten gestattet.

Mit der Erfindung wird eine LED-Lampe gemäß Anspruch 1 oder einem der Unteransprüche geschaffen. Die Erfindung beruht auf dem Grundgedanken, eine LED-Lampe bereitzustellen, die Werte, nämlich Stromstärke und Spannung, aufweist, die den an einem Vorschaltgerät gemessenen Werten einer Leuchtstofflampe derart ähneln bzw. entsprechen, dass das Vorschaltgerät davon ausgeht, dass die Leuchte sicher betrieben wird und somit nicht die Stromzufuhr unterbricht. Dazu sind die LEDs in einer parallel/seriell Schaltung, d.h. einer Parallel/Reihen-Schaltung, konzipiert. Durch die Verwendung einer parallel/seriell Schaltung wird eine Stromstärke bzw. eine Spannung erreicht, die der einer Leuchtstofflampe zumindest so weit ähnelt, dass das Vorschaltgerät die LED-Lampe nicht abschaltet. Somit kann eine LED-Lampe, die wenigstens eine in einer Röhre eingesetzte Platine, auf der mehrere LEDs angeordnet sind, und eine Fassung bzw. eine Kontaktstiftanordnung aufweist, die der einer Leuchtstofflampe entspricht, als Ersatz für eine Leuchtstofflampe in eine entsprechende Fassung eingesetzt werden. Durch die parallel/seriell Schaltung der LEDs ist dafür kein Umbau notwendig. Mit einfachen Mitteln und geringem Schaltungsaufwand wird die Funktionszuverlässigkeit deutlich erhöht.

Damit ist es möglich, Leuchtstofflampen durch entsprechende LED-Lampen zu ersetzen, ohne dass ein Umbau der Leuchte zur Umrüstung auf LEDs erforderlich ist.

Vorzugsweise weist die Platine mehrere Plätze auf, an denen Widerstände angeordnet werden können, so dass unterschiedlich viele der auf der Platine angeordneten LEDs von Strom durchfließbar sind. D.h. unterschiedlich viele der auf der Platine angeordneten LEDs können von Strom durchflossen werden. Somit ist die sich ergebende Lichtintensität, also die Strahlungsintensität, und die Lichtstärke einstellbar und variierbar. Ferner ist es möglich, LEDs mit unterschiedlicher Farbe, z.B. Hellweiß, Fleischfarbe usw., und/oder unterschiedlicher Leistung zu verwenden.

Auch über die Anzahl der auf einer Platine vorgesehenen LEDs ist die Lichtintensität und die Lichtstärke einstellbar, wobei die Platine zwischen zwanzig und dreißig LEDs, insbesondere zwischen zweiundzwanzig und sechsundzwanzig LEDs, und zwar insbesondere vierundzwanzig LEDs aufweisen kann. Alternativ kann die Platine zwischen dreißig und vierzig LEDs, insbesondere zwischen einunddreißig und fünfunddreißig LEDs, und zwar insbesondere dreiunddreißig LEDs aufweisen. Genauso gut kann die Platine zwischen vierzig und fünfzig LEDs, insbesondere zwischen vierzig und vierundvierzig LEDs, und zwar insbesondere zweiundvierzig LEDs aufweisen.

Bevorzugt sind mehrere Platinen vorgesehen, die derart miteinander verbunden sind, dass eine Parallelschaltung ermöglicht ist. Insbesondere sind die Platinen mittels Löten miteinander verbunden. So können beispielsweise fünf Platinen mit jeweils vierundzwanzig LEDs nebeneinander angeordnet sein. Die Parallelschaltung kann über am Rand der Platine angebrachte Kontaktflächen, z.B. Lötflächen oder Metallflächen zum Anlöten oder Verbinden von Verbindungsleitungen zu benachbarten Platinen, erfolgen.

Gemäß einer Ausführungsform entsprechen die Abmessungen der LED-Lampe den Abmessungen einer Leuchtstofflampe, und zwar insbesondere den Abmessungen einer T5 oder T8 Leuchtstofflampe. Da die LED-Lampe ferner eine Fassung bzw. Kontaktstiftanordnung aufweist, die der einer Leuchtstofflampe entspricht, kann die LED-Lampe ohne Umbaumaßnahmen als Ersatz für eine Leuchtstofflampe eingesetzt werden.

Mit der Erfindung wird weiterhin eine Leuchte mit mindestens einer solchen LED-Lampe bereitgestellt. Die Leuchte kann ein Vorschaltgerät und mindestens eine LED-Lampe der obengenannten Art aufweisen. Hinsichtlich der Vorteile wird auf die obigen Ausführungen verwiesen.

Weitere Merkmale und Vorteile der Erfindung ergeben sich aus der nachfolgenden Beschreibung und den Zeichnungen. Die Erfindung wird anhand verschiedener Ausführungsformen beschrieben. In den Zeichnungen zeigen:
- Figur 1: eine schematische Ansicht eines Ausführungsbeispiels einer erfindungsgemäßen Leuchte mit einem Vorschaltgerät und einer erfindungsgemäßen LED-Lampe,
- Figur 2: eine Detailansicht einer Platine, die in eine erfindungsgemäße LED-Lampe einsetzbar ist, mit mehreren LEDs,
- Figur 3: ein Schaltbild mehrerer, miteinander verbundener Platinen, die in eine erfindungs-gemäße LED-Lampe einsetzbar sind,
- Figur 4: ein weiteres Schaltbild mehrerer, miteinander verbundener Platinen, die in eine erfindungsgemäße LED-Lampe einsetzbar sind,
- Figur 5: ein weiteres alternatives Schaltbild mehrerer, miteinander verbundener Platinen, die in eine erfindungsgemäße LED-Lampe einsetzbar sind,
- Figur 6: eine Tabelle mit sich ergebenden Werten bezüglich Leistung und Spannung der in den Figuren 2 bis 5 gezeigten LED-Lampen, und
- Figur 7: ein weiteres Ausführungsbeispiel einer erfindungsgemäßen LED-Lampe.

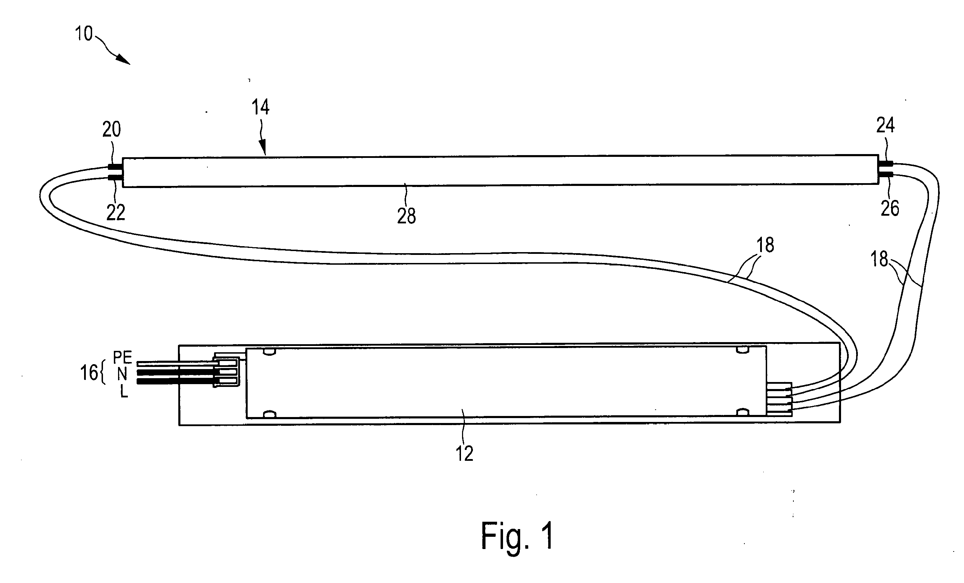

In Figur 1 ist ein Ausführungsbeispiel einer erfindungsgemäßen Leuchte 10 gezeigt, das ein Vorschaltgerät 12, insbesondere ein elektronisches Vorschaltgerät, EVG, und eine LED-Lampe 14 aufweist.

Das Vorschaltgerät 12 hat einen z.B. dreipoligen Netzanschluss 16 (PE, N, L) und ist über mehrere, insbesondere vier, Leitungen 18 mit Lampenfassungen bzw. Kontaktstiften 20, 22, 24, 26 der LED-Lampe 14 verbunden. Ein solches Vorschaltgerät 12 ist zum Betrieb von Leuchtstofflampen vorgesehen und kann aus der niederfrequenten Eingangs-Netzspannung von z.B. 50 Hz eine hochfrequente, an die Lampe 14 angelegte Ausgangs-Wechselspannung von z.B. 40 bis 60 kHz, wie etwa ca. 50-56 kHz, bei gegebenenfalls konstantem Strom erzeugen. Ausführungsbeispiele der erfindungsgemäßen Lampe 14 sind imstande, direkt mit dieser hochfrequenten Ausgangs-Wechselspannung ohne weitere Maßnahmen wie z.B. eine Frequenzreduzierung mittels eines Umrichters oder dgl. betrieben zu werden. Das Vorschaltgerät 12 kann in einigen Ausgestaltungen die in der Lampe 14, d.h. an den Kontaktstiften 20, 22, 24, 26, auftretenden Strom- und/oder Spannungswerte, insbesondere die Heizspannung einer Leuchtstofflampe, erfassen oder überwachen. Bei Abweichungen der erfassten oder überwachten Werte von den erwarteten Werten, d.h. wenn die vorliegenden Strom- und/oder Spannungswerte nicht einem vorbestimmten Wertebereich entsprechen, kann das Vorschaltgerät 12 die LED-Lampe 14 aus Sicherheitsgründen abschalten.

Die LED-Lampe 14 weist eine zumindest teilweise lichtdurchlässige Röhre (Rohr) 28 auf, die aus transparentem oder semitransparentem Material wie etwa Glas oder Kunststoff bestehen kann. Die Dimensionen, insbesondere die Länge und der Außendurchmesser und gegebenenfalls auch der Innen-Durchmesser, der Röhre 28 sowie die Abmessungen der LED-Lampe 14 mit den Kontaktstiften 20 bis 26 entsprechen vorzugsweise den üblichen Dimensionen einer Leuchtstofflampe, z.B. einer T5-Leuchtstofflampe, wobei auch die Anordnung, der Abstand und die Länge der Kontaktstifte 20, 22, 24, 26 vorzugsweise der Anordnung, dem Abstand und der Länge der Kontaktstifte einer Leuchtstofflampe entsprechen.

Da die Abmessungen der LED-Lampe 14 mit den Abmessungen einer herkömmlichen Leuchtstofflampe, insbesondere den Abmessungen einer T5 oder T8 Leuchtstofflampe übereinstimmen, kann die erfindungsgemäße LED-Lampe 14 anstelle eine Leuchtstofflampe in die Fassungen einer nicht gezeigten, zur Aufnahme einer Leuchtstofflampe vorgesehenen Leuchte ohne Umbau eingesetzt werden kann.

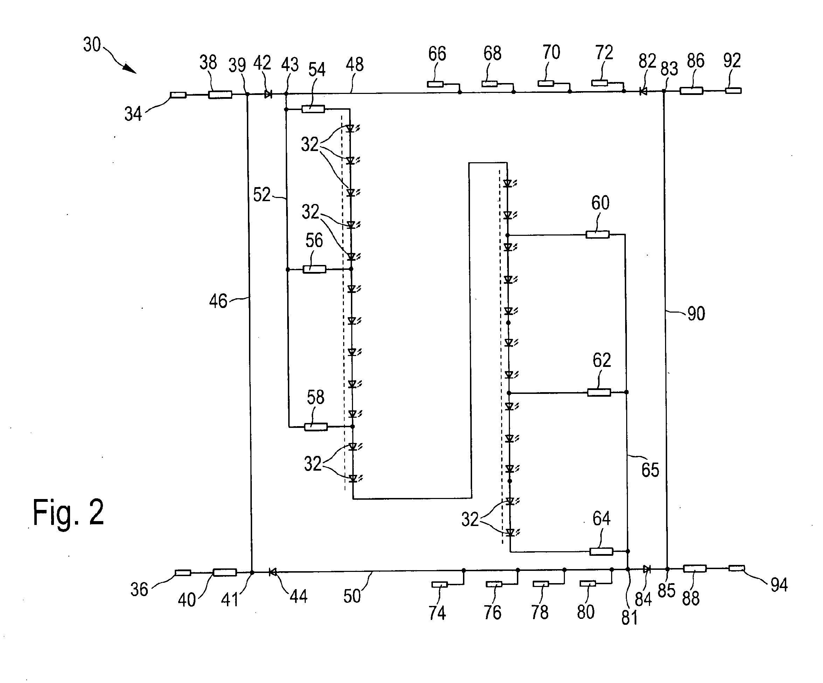

In die lichtdurchlässige bzw. teillichtdurchlässige Röhre 28 der LED-Lampe 14 ist wenigstens eine Platine 30 eingesetzt, wobei die Platine 30 mehrere LEDs 32, d.h. mehrere Leuchtdioden, auch Lumineszenzdioden genannt, aufweist. LEDs zeichnen sich gegenüber herkömmlichen Beleuchtungsvorrichtungen, insbesondere Leuchtstofflampen, durch eine erhöhte Lebensdauer, einen geringeren Energiebedarf und insbesondere durch eine höhere Lichtausbeute aus. Um zu verhindern, dass das Vorschaltgerät 12 bei Einbau der erfindungsgemäßen LED-Lampe 14 automatisch abschaltet, da die sich ergebenden Strom- und/oder Spannungswerte nicht denen einer gewöhnlichen Leuchtstofflampe entsprechen, sind die auf der wenigstens einen Platine 30 eingesetzten LEDs 32 in einer parallel/seriell Schaltung konzipiert. Durch die Anordnung der LEDs 32 in einer parallel/seriell Schaltung lassen sich Strom- und/oder Spannungswerte erreichen, die in einen Bereich fallen, der vom Vorschaltgerät 12 akzeptiert wird. D.h. das Vorschaltgerät 12 nimmt an, dass eine Leuchtstofflampe vorliegt. Die Beschaltung, und die exakte Platzierung der LEDs 32 auf der Platine 30 ist im Folgenden mit Bezug auf Figur 2 beschrieben, die eine Platine 30 in Form einer genormten Platine oder Universalplatine zeigt.

Die Platine 30 weist zwei Eingänge 34, 36 auf, die bezüglich Figur 2 links angeordnet sind und mit "J1" bzw. "J2" bezeichnet sind. Der bezüglich Figur 2 gesehen obere Eingang 34 kann dabei mit dem Kontaktstift 20 verbunden sein und mit diesem zusammenwirken, während der bezüglich Figur 2 gesehen untere Eingang 36 mit dem Kontaktstift 22 verbunden sein und mit diesem zusammenwirken kann. Mit den Eingängen 34, 36 sind jeweils Widerstände 38 bzw. 40 verbunden, die in Figur 2 mit "R1" und "R2" bezeichnet sind. Insbesondere können die Widerstände 38, 40 als 4,7 Ohm Widerstände ausgebildet sein, aber auch andere Widerstandswerte, z.B. im Bereich von 1 bis 200 Ohm, oder 2 bis 100 Ohm oder 4 bis 50 Ohm oder 4 bis 10 Ohm aufweisen. An die jeweiligen Widerstände 38, 40 schließen jeweils Gleichrichter bzw. Dioden 42, 44 an, die mit "D1" und "D2" bezeichnet sind und z.B. Gleichrichter des Typs "SM4002" sein können. Ein Verbindungspunkt 39 zwischen dem Widerstand 38 und der Anode der Diode 42 ist über eine elektrische Leitung oder Verbindung 46 direkt mit einem Verbindungspunkt 41 zwischen dem Widerstand 40 und der Kathode der Diode 44 verbunden. Die Kathode der Diode 42 ist über eine elektrische Leitung 48 mit der Kathode einer Diode 82 verbunden, während die Anode der Diode 44 über eine elektrische Leitung 50 mit der Anode einer Diode 84 verbunden ist. Die Dioden 42, 44, 82 und 84 bilden einen Vollweggleichrichter oder Brückengleichrichter.

Zwischen den Leitungen 48, 50 ist eine LED-Reihenschaltung aus Leuchtdioden, LEDs, 32 angeordnet, die über Verbindungspunkte 43 bzw. 81, Widerstände und Leitungen 52, 65 mit den Leitungen 48 bzw. 50 verbunden ist. Die LED-Reihenschaltung weist mehrere LEDs 32 auf und kann z.B. wie gezeigt abgewinkelt, im wesentlichen wellenförmig, oder in Form eines um 90 Grad gedrehten, d.h. "flachliegenden" S oder auch geradlinig oder in sonstiger Form ausgebildet auf der Platine 30 sein. Durch diese gefaltete Anordnung der Leuchtdioden können die Längen- und Breitenabmessungen der Platine auch bei größerer LED-Anzahl gering gehalten werden. Die LED-Reihenschaltung kann auch parallel geschaltete LEDs enthalten oder vollständig aus parallel geschalteten LEDs bestehen. Die LED-Reihenschaltung kann z.B. zwischen zehn und hundert, oder zwanzig bis 50, oder zwanzig bis dreißig LEDs 32 in Reihe enthalten. Bei dem gezeigten Ausführungsbeispiel sind vierundzwanzig LEDs 32 in Reihe angeordnet. Ferner sind an den Leitungen 52, 65 mehrere Bestückungsplätze 54, 56, 58, 60, 62, 64 vorgesehen, an denen Widerstände, z.B. 100 Ohm Widerstände, die mit "R5" bis "R10" bezeichnet sind, angeordnet werden können. Mindestens zwei der Bestückungsplätze 54, 56, 58, 60, 62, 64 müssen mit Widerständen besetzt sein. Durch die Auswahl der Besetzung der Bestückungsplätze 54, 56, 58, 60, 62, 64 mit Widerständen kann der Stromfluss so geleitet werden, dass einzelne LEDs spannungslos bleiben. Damit kann die Anzahl der bei Spannungsanlegung an die Anschlüsse 34, 36 bzw. 92, 94 leuchtenden LEDs gesteuert werden. Sind z.B. die Widerstände "R5" und "R10" an den Plätzen 54 und 64 vorgesehen, werden alle LEDs 32 von Strom durchflossen. Sind hingegen z.B. die Widerstände "R7" und "R9" an den Plätzen 58 und 62 vorgesehen, werden nur neun LEDs 32 von Strom durchflossen. Demnach können unterschiedlich viele LEDs 32, nämlich insbesondere zwischen vier und vierundzwanzig LEDs 32, über entsprechende Widerstände in Reihe geschaltet werden, so dass die Lichtintensität variiert werden kann. Damit ist eine Ablängung der Platine 30 oder der LED-Reihenschaltung in Fünfer-LED-Schritten (z.B. 4, 9, 14, 19, 24 LEDs) je nach Bedarf möglich.

An der oberen und der unteren Leitung 48, 50 sind ferner Anschlussflächen 66, 68, 70, 72 bzw. 74, 76, 78 und 80 vorgesehen, die mit "J5" bis "J12" versehen sind. Über diese Anschlussflächen 66, 68, 70, 72, 74, 76, 78 und 80 kann der Kontakt zu weiteren, benachbarten Platinen 30 hergestellt und eine Parallelschaltung mit LEDs ermöglicht werden, die auf den benachbarten Platinen in Reihenschaltung angeordnet sind. Insbesondere können die einzelnen Platinen 30 über die jeweiligen Anschlußflächen 66, 68, 70, 72, 74, 76, 78 und 80 miteinander verlötet sein.

In Reihe mit den Dioden 82 bzw. 84, die mit "D3" und "D4" bezeichnet und Gleichrichter des Typs "SM4002" sein können, sind zwei Widerstände 86 bzw. 88 vorgesehen. Insbesondere können die mit "R3" und "R4" bezeichneten Widerstände 86, 88 gleiche Widerstandswerte wie die Widerstände 38, 40 aufweisen und z.B. 4,7 Ohm Widerstände sein. Mit Verbindungspunkten 83 bzw. 85 zwischen den Gleichrichtern 82, 84 und den Widerständen 86, 88 ist eine elektrische Leitung 90 verbunden, die die obere und die untere Leitung 48, 50 direkt elektrisch miteinander verbindet. Ferner sind an der Platine 30 zwei Ausgänge 92, 94 vorgesehen, die an die Widerstände 86, 88 anschließend an der oberen bzw. unteren Leitung 50, 52 angeordnet sind. Die Ausgänge 92, 94 sind mit "J3" und "J4" bezeichnet. Der bezüglich Figur 2 gesehen obere Ausgang 92 kann dabei mit dem Kontaktstift 24 verbunden sein, während der bezüglich Figur 2 gesehen untere Ausgang 94 mit dem Kontaktstift 26 verbunden sein kann.

Die Breite der Platine 30, d.h. die in Figur 2 in Vertikalrichtung gemessene Abmessung ist so schmal gewählt, dass die Platine 30 in die Röhre 14 eingeschoben werden kann, und kann z.B. 5 bis 12 mm betragen. Damit ist sie für die Einführung in die Röhre einer T5 Leuchtstofflampe mit 16 mm Durchmesser oder eine T8 Röhre mit 26 mm Durchmesser geeignet. Die Länge der Platine 30, d.h. die in Figur 2 in Horizontalrichtung gemessene Abmessung ist so gewählt, dass eine oder mehrere, z.B. fünf, Platinen 30 aufeinanderfolgend in die Röhre 14 eingeschoben werden können, und kann z.B. 100 bis 500 oder 120 bis 250 mm betragen.

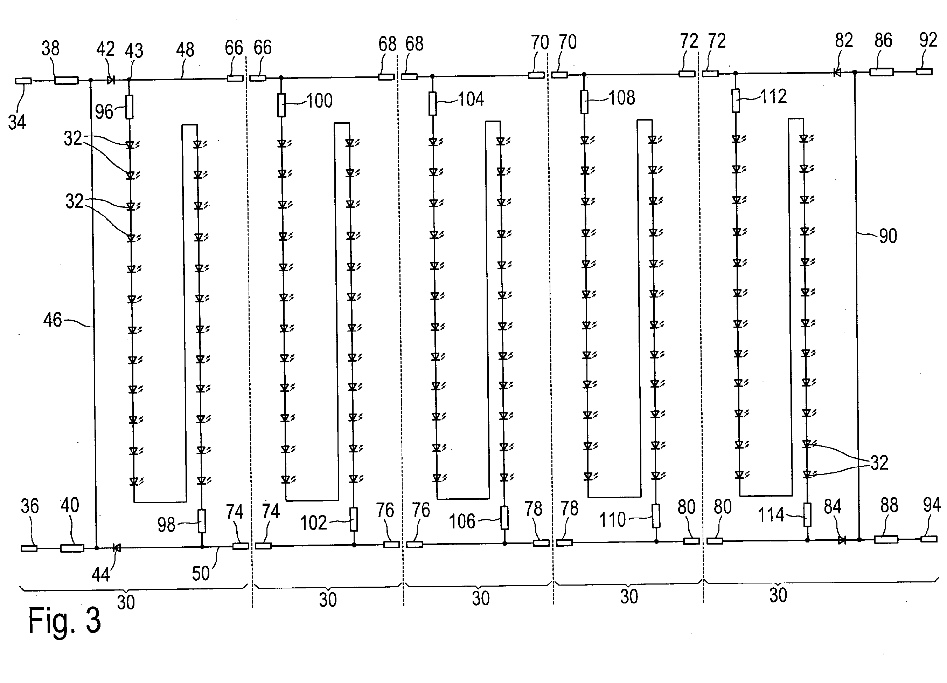

In Figur 3 sind mehrere, insbesondere fünf miteinander verbundene Platinen 30 gezeigt. Die Anzahl der Platinen kann geeignet gewählt werden und zwischen 1 bis 10, oder 2 bis 8, oder 3 bis 6 betragen. Jede Platine 30 kann die in Figur 2 gezeigte Ausgestaltung aufweisen, wodurch die Herstellung, Lagerhaltung und Montage der Platinen 30 vereinfacht wird und die Platine 30 als Universalplatine dienen kann. Die Platinen 30 sind über ihre Anschlussflächen 66 bis 80 wie gezeigt, elektrisch direkt miteinander verbunden, insbesondere z.B. mittels Löten. Dadurch sind die auf den jeweiligen Platinen 30 in Reihe angeordneten LEDs 32, d.h. die jeweiligen LED-Reihenschaltungen oder LED-Strings, parallel geschaltet. Da sich auf jeder Platine 30 ein String mit darin in Reihe angeordneten LEDs befindet, sind beim Ausführungsbeispiel gemäß Figur 3 fünf serielle LED-Strings parallel geschaltet. Dabei sind die in den Figuren 2, 3 gezeigten Anschlüsse 66 der ersten und der zweiten Platine 32 (von links gemäß Figur 3 gezählt) direkt miteinander verbunden. Auch die Anschlüsse 74 der ersten und der zweiten Platine 32 sind direkt miteinander verbunden. Ebenso sind die in den Figu ren 2, 3 gezeigten Anschlüsse 68 bzw. 76 der zweiten und der dritten Platine 32 (von links gemäß Figur 3 gezählt) jeweils direkt miteinander verbunden. Weiterhin sind die in den Figuren 2, 3 gezeigten Anschlüsse 70 bzw. 78 der dritten und der vierten Platine 32 (von links gemäß Figur 3 gezählt) jeweils direkt miteinander verbunden. Ferner sind die in den Figuren 2, 3 gezeigten Anschlüsse 72 bzw. 80 der vierten und der fünften Platine 32 (von links gemäß Figur 3 gezählt) jeweils direkt miteinander verbunden. Der verfügbare LED-Strom je String kann bei ca. 120 mAeff liegen.

Beim Ausführungsbeispiel gemäß Figur 3 weist jede Platine 30 vierundzwanzig in Reihe angeordnete LEDs 32 auf. Jede LED-Reihenschaltung ist jeweils mit einem, zwei oder mehr seriell geschalteten Widerständen, z.B. 100 Ohm, 200 Ohm, oder 50 bis 400 Ohm-Widerständen versehen. Die in Figur 3 gezeigten Widerstände 96, 100, 104, 108, 112 sind an dem in Figur 2 dargestellten Bestückungsplatz 54 angeordnet, wohingegen die Widerstände 98, 102, 106, 110, 114 an dem in Figur 2 dargestellten Bestückungsplatz 64 angeordnet sind. Die Widerstände 96, 98, 100, 102, 104, 106, 108, 110, 112 und 114, können auch an anderen Bestückungsplätzen 56 bis 62 gemäß Figur 2 auf der jeweiligen Platine angeordnet sein, so dass pro Platine unterschiedlich viele LEDS von Strom durchflossen sein können, wie es bereits in Verbindung mit Figur 2 beschrieben ist.

Über die bereits zu Figur 2 beschriebenen Eingänge 34, 36 auf der ersten Platine 30 und die Ausgänge 92, 94 auf der letzten Platine 30 gemäß Figur 3 werden die miteinander verbundenen Platinen 30 mit den entsprechenden Kontaktstiften (oder Halterungen) 20, 22 bzw. 24, 26 verbunden. Die Platinen 30 sind in der Röhre 28 der LED-Lampe 14 räumlich hintereinander angeordnet, jedoch in der beschriebenen Weise elektrisch parallel geschaltet.

Um die Lichtverhältnisse an die gewünschten Bedingungen anzupassen, können LEDs 32 mit unterschiedlicher Lichtfarbe und/oder unterschiedlichen Leistungen verwendet werden. In Figur 3 beispielsweise werden gemischt hellweiße oder Tageslicht-LEDs ("CL824MU1L2") mit einer Farbtemperatur von 6.400 K, und fleischfarbene oder Warmton-LEDs ("CL824MU1 D") mit einer Farbtemperatur von 2.800 K eingesetzt. Bei dem Ausführungsbeispiel gemäß Figur 3 ist jede dritte LED in einem Warmton gewählt. Dabei ist die zweite, fünfte, achte, elfte, vierzehnte, siebzehnte, zwanzigste und dreiundzwanzigste LED jedes LED-Strings als Warmton-LED ausgeführt, während die übrigen LEDs hellweisse LEDs sind. Bei einer Gesamtzahl von 120 LEDs (fünf Platinen 30 mit jeweils vierundzwanzig LEDs 32) sind also 40 LEDs in einem Warmton, d.h. 8 LEDs pro String in einem Warmton gewählt.

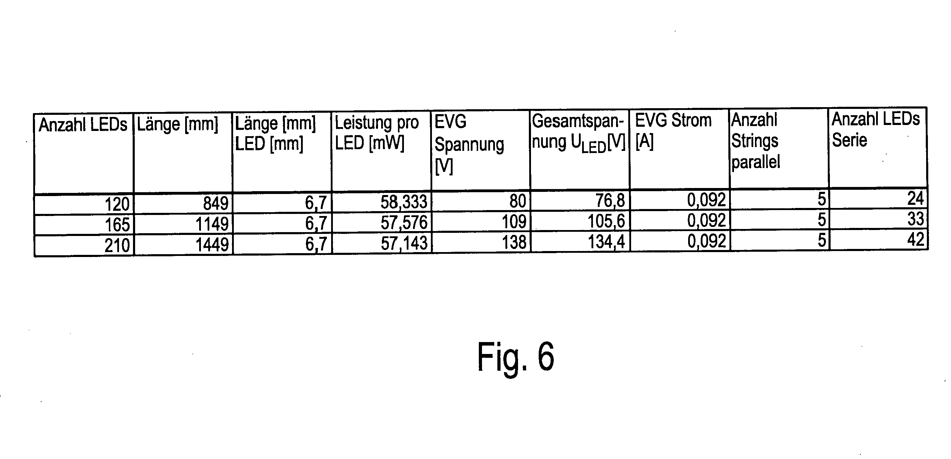

Das in Figur 3 gezeigte Ausführungsbeispiel der LED-Lampe kann z.B. eine Gesamtlänge von 849 mm und eine Leistung von 7 W aufweisen. Ferner ergibt sich eine Leistung pro LED von 58,333 mW, eine Spannung am Vorschaltgerät von 80 V und eine Gesamtspannung U_{LED} an den LED-Strings von 76,8 V (vgl. Figur 6). Die je LED 32 abfallende LED-Spannung beträgt 3,200 V. Der Strom je LED-String liegt bei 18,4 mA. Bei fünf parallelen Strings ergibt sich damit ein Gesamtstrom von ca. 92 mA.

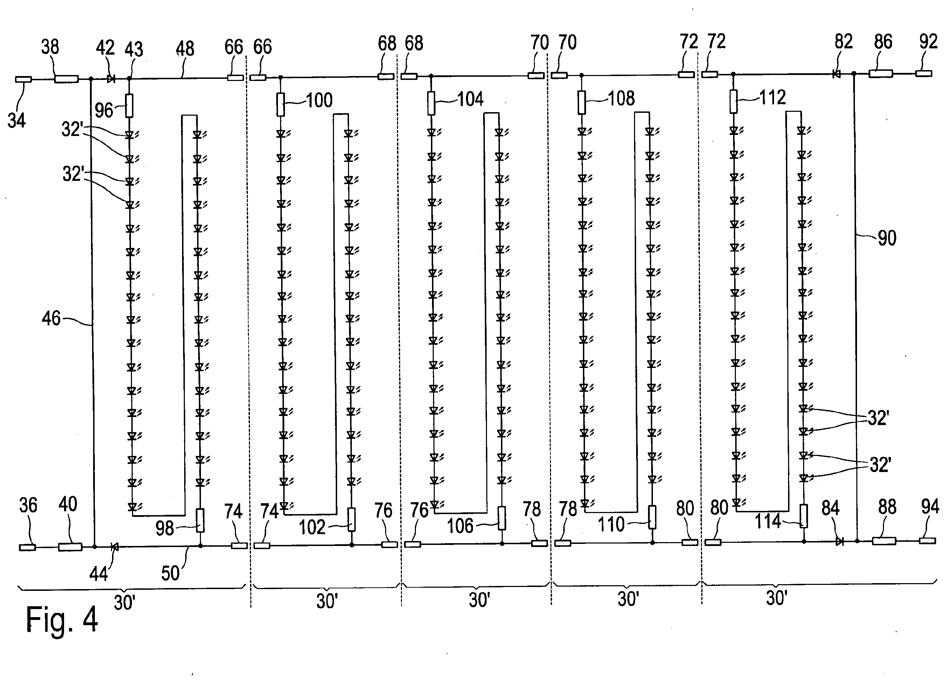

Die in Figur 4 gezeigte Ausführungsform der Platinen eines Ausführungsbeispiels der erfindungsgemäßen LED-Lampe unterscheidet sich von der in Figur 3 gezeigten Ausführungsform darin, dass pro Platine 30' eine erhöhte Anzahl von LEDs, z.B. zwischen dreißig und fünfzig, oder dreißig und vierzig LEDs 32', insbesondere dreiunddreißig LEDs 32' vorgesehen sind. Jede Platine 30' kann identisch wie die in Figur 2 gezeigte Platine 30 ausgestaltet sein, mit dem einzigen Unterschied, dass dreiunddreissig LEDs 32' statt vierundzwanzig LEDs 32 wie bei Figur 2 vorgesehen sind. Es ergeben sich fünf parallele LED-Strings mit dreiunddreißig in Reihe geschalteten LEDs 32'. Um die Lichtverhältnisse an die gewünschten Bedingungen anzupassen, können auch hier LEDs 32' mit unterschiedlicher Lichtfarbe und/oder Leistungen verwendet. Insbesondere ist jede dritte LED 32' in einem Warmton gewählt. Bei einer Gesamtzahl von 165 LEDs (fünf Platinen 30' mit jeweils dreiunddreißig LEDs 32') sind 55 LEDs, d.h. 11 LEDs pro String, (in einem Warmton gewählt, während die verbleibenden LEDs hellweiße LEDs sein können.

Das in Figur 4 gezeigte Ausführungsbeispiel der LED-Lampe kann z.B. eine Gesamtlänge der LED-Lampe 14 von 1149 mm und eine Leistung von 9,5 W aufweisen. Die Leistung pro LED beträgt 57,576 mW, die Spannung am Vorschaltgerät beträgt 109 V und die Gesamtspannung U_{LED} an den LED-Strings beträgt 105,6 V (vgl. Figur 6). Die je LED 32' abfallende LED-Spannung beträgt 3,200 V. Der Strom je LED-String liegt bei 18,4 mA.

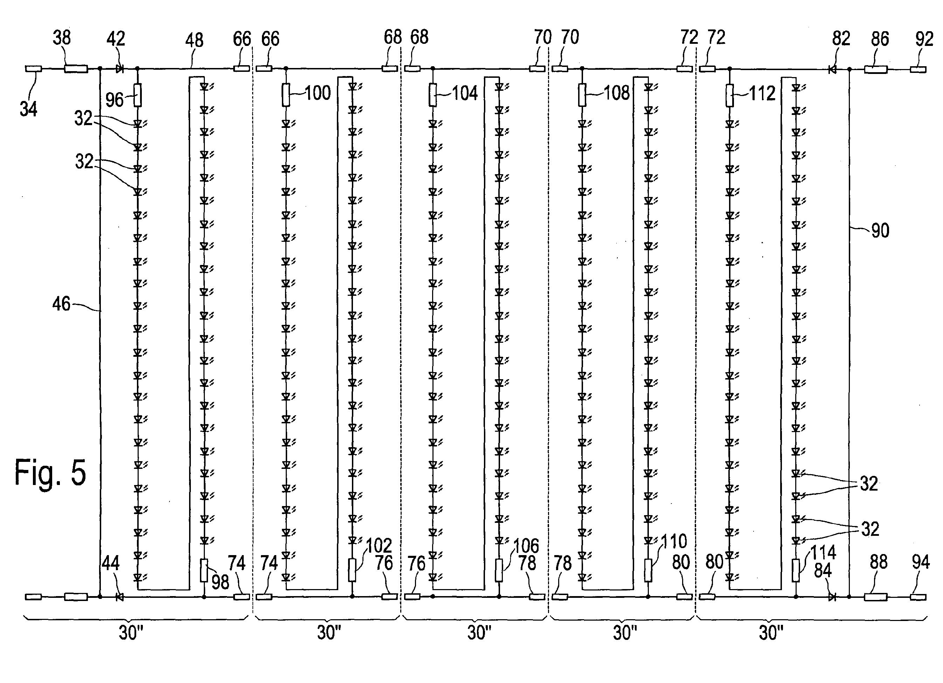

Die in Figur 5 gezeigte Ausführungsform der Platinen 30" eines Ausführungsbeispiels der erfindungsgemäßen LED-Lampe unterscheidet sich von der in Figur 3 gezeigten Ausführungsform darin, dass zwischen vierzig und fünfzig LEDs 32", insbesondere zweiundvierzig pro Platine 30" angeordnet sind. Jede Platine 30" kann identisch wie die in Figur 2 gezeigte Platine 30 ausgestaltet sein, mit dem einzigen Unterschied, dass eine höhere Anzahl, insbesondere zweiundvierzig LEDs 32' statt vierundzwanzig LEDs 32 wie bei Figur 2 vorgesehen sind. Wiederum sind LEDs mit unterschiedlicher Lichtfarbe und/oder Leistung angeordnet. Zweiundvierzig LEDs 32 und fünf Platinen 30 ergeben eine Gesamtzahl von 210 LEDs. Das in Figur 5 gezeigte Ausführungsbeispiel der LED-Lampe kann z.B. eine Gesamtlänge der LED-Lampe 14 von 1449 mm und eine Leistung von 12 W aufweisen. Die Leistung pro LED beträgt 57,143 mW, die Spannung am Vorschaltgerät beträgt 138 V und die Gesamtspannung U_{LED} an den LED-Strings beträgt 134,4 V (vgl. Figur 6). Die je LED 32" abfallende LED-Spannung beträgt 3,200 V. Der gemessene Strom je LED-String liegt bei 18,4 mA.

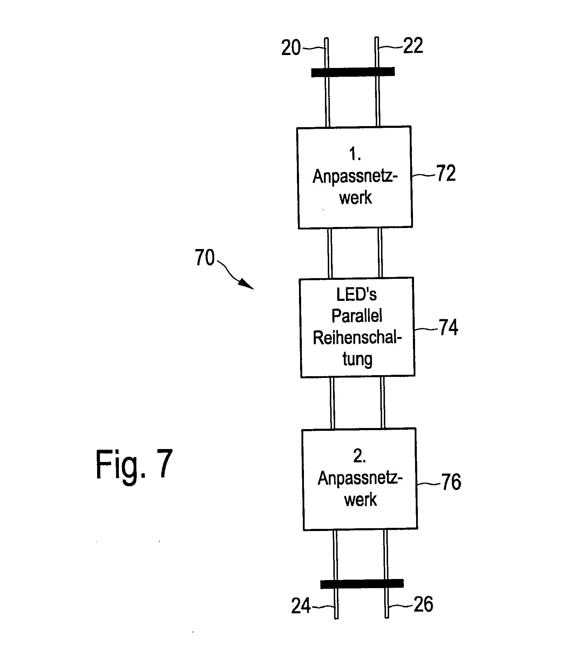

In Figur 7 ist ein weiteres Ausführungsbeispiel 70 der erfindungsgemäßen LED-Leuchte dargestellt, das die Aussenabmessungen und externe Beschaltung sowie die Röhre 14, wie in Figur 1 gezeigt, aufweisen und in die nicht separat dargestellte Röhre 14 eingeschoben sein kann. Das Ausführungsbeispiel 70 weist die auch in Figur 1 gezeigten Kontaktstifte 20, 22, 24, 26 auf, deren Anordnung, Material, und Abmessungen denen einer herkömmlichen Leuchtstofflampe entsprechen kann. Das Ausführungsbeispiel gemäß Figur 7 umfasst ein erstes, mit den Kontaktstiften 20, 22 verbundenes Anpassnetzwerk 72, eine LED-Parallel/Reihenschaltung 74, und ein zweites, mit den Kontaktstiften 24, 26 verbundenes Anpassnetzwerk 76. Die LED-Parallel/Reihenschaltung 74 ist zwischen die beiden Anpassnetzwerke 72, 76 eingefügt und mit diesen elektrisch verbunden. Die Anpassnetzwerke 72, 76 können durch aktive oder passive Bauelemente realisiert sein. Das Anpassnetzwerk 72 kann z.B. die in den Figuren 2 bis 5 gezeigte Ausgestaltung mit Vorwiderständen 38, 40 und Dioden 42, 44 aufweisen, während das Anpassnetzwerk 76 z.B. die in den Figuren 2 bis 5 gezeigte Ausgestaltung mit Widerständen 86, 88 und Dioden 82, 84 haben kann. Die Anpassnetzwerke 72, 76 können aber auch andere Ausgestaltung haben, die eine unerwünschte Lampenabschaltung durch das Vorschaltgerät verhindern können. Die LED-Parallel/Reihenschaltung 74 kann z.B. durch die parallel zueinander geschalteten LED-Serienschaltungen bzw. LED-Strings und die Widerstände 96 bis 114 gebildet sein, wie sie in den Figuren 2 bis 5 gezeigt sind.

Anstelle von, oder auch als, LEDs können SMDs, "surface mounted devices", also oberflächenmontierte Komponenten, als Leuchtmittel verwendet werden.

Weiterhin kann ein Zündsimulationsschalter vorgesehen werden, der einen Leuchtstofflampen-Zündvorgang simuliert, so dass das EVG bei eventueller Überwachung auch dieses Parameters keinen zur Abschaltung führenden Unterschied erkennen kann.

Mit den beschriebenen Ausführungsbeispielen der erfindungsgemäßen LED-Lampe wird für das EVG das Vorhandensein der Heizwendeln einer Leuchtstofflampe simuliert, so dass unerwünschte Abschaltungen vermieden werden können. Hierbei kommen bei den beschriebenen Ausführungsbeispielen lediglich die Leuchtdioden und die Widerstände in Parallel/Seriell-Verschaltung zum Einsatz, so dass keine weiteren aktiven oder passiven, aufwändigen Simulationskomponenten benötigt werden.

Gemäß einem oder mehreren Ausführungsbeispielen wird somit eine LED-Lampe mit einer zumindest teilweise lichtdurchlässigen Röhre (28) und mehreren in der Röhre (28) angeordneten Leuchtdioden (32) geschaffen, wobei die Leuchtdioden in Form einer Parallel/ReihenSchaltung miteinander verschaltet sind.

Wenigstens eine Platine (30, 30', 30") der LED-Lampe kann in die Röhre (28) eingesetzt sein und mehrere Leuchtdioden (32) tragen sowie mit mindestens einem Kontaktstiften (22, 24, 26, 28) der LED-Lampe (14) verbunden sein.

Gemäß einem oder mehreren Ausführungsbeispielen sind mindestens zwei Reihenschaltungen aus Leuchtdioden (32') vorhanden, die parallel zueinander geschaltet sind. Durch diese Parallel/Reihen-Schaltung lässt sich mit einfachen Mitteln überraschend eine hohe Funktionszuverlässigkeit erreichen. Ferner werden unerwünschte Lampenabschaltungen unterbunden.

Die LED-Lampe kann einen Vollweggleichrichter, insbesondere in Form eines Brückengleichrichters (42, 44, 82, 84) enthalten, der mit der Parallel/Reihenschaltung verbunden ist. Damit lässt sich eine polaritätsrichtige Beaufschlagung der LED-Reihenschaltungen bei beiden Spannungshalbwellen der im Regelfall sinusförmigen, ggfls. aufgrund des Vorschaltgeräts hochfrequenten Eingangsspannung sicherstellen.

Mindestens zwei LED-Reihenschaltungen können parallel zwischen gegenüberliegende Anschlüsse (43, 81) des Brückengleichrichters (42, 44, 82, 84) geschaltet sein, so dass gleiche Spannungsbeaufschlagung mit nur einer Polarität erfolgt und parallele Ströme fließen.

Die Parallel/Reihenschaltung kann mindestens eine, vorzugsweise zwei oder mehr parallel zueinander geschaltete LED-Reihenschaltungen umfassen, von denen jede mindestens einen, vorzugsweise zwei, in Reihe geschaltete Widerstände (96 bis 114) aufweist. Damit lässt sich ein gewünschter Stromfluss und Spannungsabfall sicherstellen, der zur Emulation einer Leuchtstofflampe, insbesondere deren Heizwendein ausreicht.

Mindestens ein Widerstand (38, 40) kann in Reihe mit jeweils einem Kontaktstift (22, 24, 26, 28) der LED-Lampe (14) geschaltet sein, was vorzugsweise bei allen Kontaktstiften (22, 24, 26, 28) der LED-Lampe (14) der Fall ist.

Die mindestens eine Platine (30, 30', 30") kann mehrere Bestückungsplätze (54, 56, 58, 60, 62, 64) aufweisen, an denen Widerstände angeordnet werden können, über die selektiv eine unterschiedliche Anzahl von auf der jeweiligen Platine (30) angeordneten Leuchtdioden (32) mit Strom speisbar sind. Damit ist die Platine universal für verschiedene Anwendungen und Helligkeitswünsche verwendbar.

Gemäß Ausführungsbeispielen kann die mindestens eine Platine (30)
zwischen zwanzig und dreißig LEDs (32), insbesondere zwischen zweiundzwanzig und sechsundzwanzig LEDs (32), und insbesondere vierundzwanzig LEDs (32), und/oder
zwischen dreißig und vierzig LEDs (32), insbesondere zwischen einunddreißig und fünfunddreißig LEDs (32), und insbesondere dreiunddreißig LEDs (32), und/oder
zwischen vierzig und fünfzig LEDs (32), insbesondere zwischen vierzig und vierundvierzig LEDs (32), und zwar insbesondere zweiundvierzig LEDs (32) aufweisen.

Vorzugsweise sind zwei oder mehr Platinen (30, 30', 30") vorgesehen, die derart miteinander verbindbar sind, dass eine Parallelschaltung, z.B. durch Löten oder sonstige elektrische Verbindung, ermöglicht ist.

Bei Ausführungsbeispiel entsprechen die Abmessungen der LED-Lampe (14) den Abmessungen einer Leuchtstofflampe, und zwar insbesondere den Abmessungen einer T5 oder T8 Leuchtstofflampe.

Bei einem oder mehreren Ausführungsbeispielen sind mindestens zwei Arten von Leuchtdioden, insbesondere mit unterschiedlicher Farbtemperatur, auf der oder den Platinen (30, 30', 30") angeordnet. Damit lassen sich gemischte Farben einstellen, z.B. Warmtöne gemischt mit hellweißem Licht.

Gemäß Ausführungsbeispielen der Erfindung wird auch eine Leuchte mit einem Vorschaltgerät (12) und einer LED-Lampe (14) gemäß einem oder mehreren der vorhergehend beschriebenen Ausgestaltungen geschaffen.

Gemäß Ausführungsbeispielen wird ferner auch eine Platine zur Verwendung in einer LED-Lampe (14), wie zuvor beschrieben, geschaffen, die mindestens eine aus Leuchtdioden (32') bestehende Reihenschaltung aufweist und auch mindestens eines oder mehrere der nachfolgenden Merkmale umfassen kann:
einen Vollweggleichrichter, insbesondere in Form eines Brückengleichrichters (42, 44, 82, 84), der mit der Reihenschaltung verbunden ist,
mindestens eine LED-Reihenschaltung, die zwischen gegenüberliegende Anschlüsse (43, 81) des Brückengleichrichters (42, 44, 82, 84) geschaltet ist,
mindestens einen, vorzugsweise zwei Widerstände (96 bis 114), die mit der Reihenschaltung in Reihe geschaltet sind,
mindestens ein Widerstand (38, 40), der in Reihe mit mindestens einem, vorzugsweise allen Kontaktstiften (22, 24, 26, 28) der LED-Lampe (14) geschaltet ist,
die Platine (30, 30', 30") weist mehrere Bestückungsplätze (54, 56, 58, 60, 62, 64) auf, an denen Widerstände angeordnet werden können, über die selektiv eine unterschiedliche Anzahl von auf der Platine (30, 30', 30") angeordneten Leuchtdioden (32) mit Strom speisbar sind,
die Platine (30, 30', 30") umfasst
zwischen zwanzig und dreißig LEDs (32), insbesondere zwischen zweiundzwanzig und sechsundzwanzig LEDs (32), und insbesondere vierundzwanzig LEDs (32), und/oder
zwischen dreißig und vierzig LEDs (32), insbesondere zwischen einunddreißig und fünfunddreißig LEDs (32), und insbesondere dreiunddreißig LEDs (32), und/oder
zwischen vierzig und fünfzig LEDs (32), insbesondere zwischen vierzig und vierundvierzig LEDs (32), und zwar insbesondere zweiundvierzig LEDs (32) auf,
   die Platine (30, 30',30") weist Kontaktflächen (66, 68, 70, 72, 74, 76, 78, 80) zur Parallelschaltung einer auf der Platine vorhandenen Leuchtdioden-Reihenschaltung mit mindestens einer auf einer anderen Platine vorhandenen Leuchtdioden-Reihenschaltung auf.

Ausführungsbeispiele der Erfindung betreffen eine LED-Lampe, die eine zumindest teilweise lichtdurchlässige Röhre (28) und mehrere in der Röhre (28) angeordneten Leuchtdioden (32) aufweist. Die Leuchtdioden sind in Form einer Parallel/Reihen-Schaltung miteinander verschaltet sind. Hierbei sind vorzugsweise zwei Reihenschaltungen aus Leuchtdioden parallel zueinander geschaltet. Weiterhin kann ein Vollweggleichrichter, insbesondere in Form eines Brückengleichrichters vorgesehen sein, der mit der Parallel/Reihenschaltung verbunden ist. Die LED-Lampe lässt sich störungsfrei auch mit einem elektronischen Vorschaltgerät betreiben und kann eine herkömmliche Leuchtstofflampe ohne Umbaumaßnahmen ersetzen.

## Patentansprüche

1. LED-Lampe mit
einer zumindest teilweise lichtdurchlässigen Röhre (28) und
mehreren in der Röhre (28) angeordneten Leuchtdioden (32),
die in Form einer Parallel/Reihen-Schaltung miteinander verschaltet sind.

2. LED-Lampe nach Anspruch 1, mit wenigstens einer Platine (30, 30', 30"), die in die Röhre (28) eingesetzt ist, mehrere Leuchtdioden (32) trägt, und mit mindestens einem Kontaktstiften (22, 24, 26, 28) der LED-Lampe (14) verbunden ist.

3. LED-Lampe nach Anspruch 1 oder 2, **gekennzeichnet durch** mindestens zwei Reihenschaltungen aus Leuchtdioden (32'), die parallel zueinander geschaltet sind.

4. LED-Lampe nach einem der vorhergehenden Ansprüche, **gekennzeichnet durch** einen Vollweggleichrichter, insbesondere in Form eines Brückengleichrichters (42, 44, 82, 84), der mit der Parallel/Reihenschaltung verbunden ist.

5. LED-Lampe nach Anspruch 4, **dadurch gekennzeichnet, dass** mindestens zwei LED-Reihenschaltungen parallel zwischen gegenüberliegende Anschlüsse (43, 81) des Brückengleichrichters (42, 44, 82, 84) geschaltet sind.

6. LED-Lampe nach einem der vorhergehenden Ansprüche, **dadurch gekennzeichnet, dass** die Parallel/Reihenschaltung mindestens eine, vorzugsweise zwei oder mehr LED-Reihenschaltungen umfasst, von denen jede mindestens einen, vorzugsweise zwei, in Reihe geschaltete Widerstände (96 bis 114) aufweist.

7. LED-Lampe nach einem der vorhergehenden Ansprüche, **dadurch gekennzeichnet, dass** mindestens ein Widerstand (38, 40) in Reihe mit mindestens einem, vorzugsweise allen Kontaktstiften (22, 24, 26, 28) der LED-Lampe (14) geschaltet ist.

8. LED-Lampe nach einem der vorhergehenden Ansprüche, **dadurch gekennzeichnet, dass** die mindestens eine Platine (30, 30', 30") mehrere Bestückungsplätze (54, 56, 58, 60, 62, 64) aufweist, an denen Widerstände angeordnet werden können, über die selektiv eine unterschiedliche Anzahl von auf der jeweiligen Platine (30) angeordneten Leuchtdioden (32) mit Strom speisbar sind.

9. LED-Lampe nach einem der vorhergehenden Ansprüche, **dadurch gekennzeichnet, dass** die mindestens eine Platine (30)
zwischen zwanzig und dreißig LEDs (32), insbesondere zwischen zweiundzwanzig und sechsundzwanzig LEDs (32), und insbesondere vierundzwanzig LEDs (32), und/oder
zwischen dreißig und vierzig LEDs (32), insbesondere zwischen einunddreißig und fünfunddreißig LEDs (32), und insbesondere dreiunddreißig LEDs (32), und/oder
zwischen vierzig und fünfzig LEDs (32), insbesondere zwischen vierzig und vierundvierzig LEDs (32), und zwar insbesondere zweiundvierzig LEDs (32) aufweist.

10. LED-Lampe nach einem der vorhergehenden Ansprüche,
wobei mehrere Platinen (30, 30', 30") vorgesehen sind, die derart miteinander verbindbar sind, dass eine Parallelschaltung ermöglicht ist.

11. LED-Lampe nach einem der vorhergehenden Ansprüche,
wobei mindestens zwei Platinen (30) durch Löten miteinander verbunden sind.

12. LED-Lampe nach einem der vorhergehenden Ansprüche,
wobei die Abmessungen der LED-Lampe (14) den Abmessungen einer Leuchtstofflampe entsprechen, und zwar insbesondere den Abmessungen einer T5 oder T8 Leuchtstofflampe.

13. LED-Lampe nach einem der vorhergehenden Ansprüche,
wobei mindestens zwei Arten von Leuchtdioden, insbesondere mit unterschiedlicher Farbtemperatur, auf der oder den Platinen (30, 30', 30") angeordnet sind.

14. Leuchte, mit einem Vorschaltgerät (12) und einer LED-Lampe (14) gemäß einem der vorhergehenden Ansprüche.

15. Platine zur Verwendung in einer LED-Lampe (14) nach einem der Ansprüche 1 bis 13, **gekennzeichnet durch** mindestens eine aus Leuchtdioden (32') bestehende Reihenschaltung.

16. Platine nach Anspruch 15, **gekennzeichnet durch** mindestens eines oder mehrere der nachfolgenden Merkmale:
einen Vollweggleichrichter, insbesondere in Form eines Brückengleichrichters (42, 44, 82, 84), der mit der Reihenschaltung verbunden ist,
mindestens eine LED-Reihenschaltung, die zwischen gegenüberliegende Anschlüsse (43, 81) des Brückengleichrichters (42, 44, 82, 84) geschaltet ist,
mindestens einen, vorzugsweise zwei Widerstände (96 bis 114), die mit der Reihenschaltung in Reihe geschaltet sind,
mindestens ein Widerstand (38, 40), der in Reihe mit mindestens einem, vorzugsweise allen Kontaktstiften (22, 24, 26, 28) der LED-Lampe (14) geschaltet ist,
die Platine (30, 30', 30") weist mehrere Bestückungsplätze (54, 56, 58, 60, 62, 64) auf, an denen Widerstände angeordnet werden können, über die selektiv eine unterschiedliche Anzahl von auf der Platine (30, 30', 30") angeordneten Leuchtdioden (32) mit Strom speisbar sind,
die Platine (30, 30', 30") umfasst
zwischen zwanzig und dreißig LEDs (32), insbesondere zwischen zweiundzwanzig und sechsundzwanzig LEDs (32), und insbesondere vierundzwanzig LEDs (32), und/oder
zwischen dreißig und vierzig LEDs (32), insbesondere zwischen einunddreißig und fünfunddreißig LEDs (32), und insbesondere dreiunddreißig LEDs (32), und/oder
zwischen vierzig und fünfzig LEDs (32), insbesondere zwischen vierzig und vierundvierzig LEDs (32), und zwar insbesondere zweiundvierzig LEDs (32) auf,
die Platine (30, 30',30") weist Kontaktflächen (66, 68, 70, 72, 74, 76, 78, 80) zur Parallelschaltung einer auf der Platine vorhandenen Leuchtdioden-Reihenschaltung mit mindestens einer auf einer anderen Platine vorhandenen Leuchtdioden-Reihenschaltung auf.
